# EUROPEAN PATENT APPLICATION

(11) **EP 3 502 846 A1**
(43) Date of publication of application: **26.06.2019**
(21) Application number: 18214809.8
(22) Date of filing: 20.12.2018
(51) Int. Cl.: G06F 3/01, G06F 3/0481, G06F 3/0484, B60K 35/00

(54) **METHOD FOR MANAGING A GRAPHIC DISPLAY OF AT LEAST ONE MESSAGE IN A VEHICLE**

(30) Priority: 20.12.2017 ES 201731434
(71) Applicant: Seat, S.A., 08760 Martorell (ES)
(72) Inventor: MORANTA MARTI, Sebastian, 08760 Martorell, Barcelona (ES); COROMINAS MARCE, Joel, 08760 Martorell, Barcelona (ES); BAYONA MARGARIT, Teresa, 08760 Martorell, Barcelona (ES); BAÑOS SERRADILLA, Victor, 08760 Martorell, Barcelona (ES)
(74) Representative: Elzaburu S.L.P.

(57) **Abstract**

Method for managing a graphic display of at least one message (3) in a vehicle (1), which comprises displaying a message (3) on a graphic display device (2), detecting an orientation (4) of an eyeball of a user, determining a start and an end of coincidence between the orientation (4) of the eyeball and the graphic display device (2) on which the at least one message (3) is displayed, counting a time period between the start and the end, and hiding the at least one message (3) if the time period counted is greater than a predefined value (5), such that messages are automatically discarded when the user has seen them, thereby offering greater efficiency in the use of processing resources, without compromising the precision of the device.

## Description

### SUBJECT MATTER OF THE INVENTION

The present patent application relates to a method for managing a graphic display of at least one message in a vehicle, according to Claim 1, which includes notable innovations and advantages.

### BACKGROUND OF THE INVENTION

These days, the screens on the dashboards of vehicles sometimes display messages to the driver, with different types of information, such as information to assist driving or personal information. These messages, which can sometimes be annoying or inappropriate, appear at a time when the driver is unable to pay them attention, or even if he can pay attention, he is unable to deactivate them. Often, in order to mark these messages as read and, therefore, remove them from the screen, it is necessary to touch said screen.

Thus, the usual way to get rid of such messages, or pop ups, is either to allow a certain amount of time to pass or by means of a manual action or confirmation, by pressing a button for this purpose. The problem is that, with the time factor, the message may not be seen by the user, whereas, if it is necessary to push a button or operate the screen, the user does not stay focused on driving.

In this regard, the prior art includes, as disclosed in US20140198032, a method and apparatus for displaying a screen using an eye tracker in a portable terminal. The method includes displaying a message on the display unit, determining the position of the user's eyeball when the message is displayed, determining whether the message is read by comparing eyeball tracking information, gathered by photographing the user's eye, with a position of the message displayed, and distinguishing an unread message from a read message.

In said invention, apart from distinguishing unread messages from read messages, in the case of very large text, it is capable of ascertaining at which point the user stops reading the message and the next time the apparatus starts up, it displays this point as the start of reading of the message. To be specific, the message is displayed at a top end of the screen. Therefore, it discusses recognizing where the message is displayed on the screen, recognizing where exactly the user is looking, and ascertaining if the message has been read or not. This is done by determining precisely the position of the eyes. To this end, it is necessary to place a camera close to and perpendicular to the eyes.

Also disclosed in the prior art, in US20150169048, is a device that includes a screen, a processor, and a memory accessible to the processor. The memory bears instructions executable by the processor to receive at least one signal from a camera in communication with the device, so as to determine whether or not a user of the device is looking at a portion of the screen based on a signal. Information is displayed in response to the determination that the user is looking at the portion of said screen.

This invention of a method for controlling information displayed on a screen includes the steps of presenting an item of information in a predetermined zone, comparing whether the user is looking at this zone for a predefined time period, displaying additional information on this first item of information, and if a predefined time period elapses, deleting the information. Note that, unlike the present invention, the predefined periods are set by the user and are predetermined, not tailored to the content of the message.

Therefore, and in light of the above, it is clear that there is still a need to have a method for managing a graphic display of at least one message in a vehicle, automatically discarding messages when the user has seen them, thereby offering greater efficiency in the use of processing resources, attaining a high level of precision in decision-making.

### DESCRIPTION OF THE INVENTION

The present invention consists of a method for managing a graphic display of at least one message in a vehicle, according to which the messages or pop ups are automatically discarded when the user has seen them. In other words, when the user is looking at the message, and depending on the content of the latter, the message may be discarded automatically, once it has been determined that the user has had sufficient time to read it.

Said automatic discarding of the message or pop up displayed on the screen, i.e. without the user having to take any action, is less distracting when driving and allows the user of the vehicle to better focus his attention on driving. Currently, messages or warnings disappear either when the user presses a confirmation area on the touch screen, or based on time. The former requires action that could take attention away from driving, while in the latter case there is the possibility that the user will not have seen the message on the screen.

Some noteworthy features of the invention are:
- warning or message generated in a zone of the screen,
- warning or message discarded when an eye tracker device detects that the user has focused his attention on the warning, as a function of various parameters, and
- elimination or minimization of the warning or message, depending on whether or not the user has to perform some subsequent action.

According to the present invention, it is not necessary to use technology that is capable of ascertaining the exact zone of the screen on which the user is focusing, but simply one which can determine what area of the screen the user is looking at. Unlike the prior art, the length of time it takes a user to read the message is estimated on the basis of certain parameters, this being compared with the time the user has actually spent looking at said message, taking into account that the message may be read in a series of glances by the user, since the user must focus his attention on driving.

To this end, the following processing logic is applied:
- if the observation time is less than a minimum time, the message stays on the screen;
- if the observation time is greater than a minimum time but less than a maximum time, the message is removed from the screen;
- if the observation time is greater than a maximum time, the message is removed from the screen, even if the user continues to look in the direction of the screen.

The observation time refers to the length of time for which it is detected that the user is looking at the zone of the screen where the message is. The minimum time is the minimum time period in which it is assumed that the user can have read or understood the message. The maximum time is the maximum amount of time it is desired for the user to be looking at the message, beyond which it is considered that he is not concentrating properly on driving.

Thus, and more specifically, the present invention relates to a method for managing a graphic display of at least one message in a vehicle, in which the method comprises the steps of:
- displaying at least one message on at least one graphic display device, or screen, of the vehicle,
- detecting an orientation of at least one eyeball of a user of the vehicle,
- determining a start of coincidence between the orientation of the at least one eyeball of the user of the vehicle and the graphic display device of the vehicle on which the at least one message is displayed;
- determining an end of the coincidence between the orientation of the at least one eyeball of the user of the vehicle and the graphic display device of the vehicle on which the at least one message is displayed;
- counting a time period between the start of coincidence and the end of coincidence between the orientation of the at least one eyeball of the user of the vehicle and the graphic display device of the vehicle, and
- hiding the at least one message if the time period counted is greater than a predefined value.

Thus, through the method of the present invention, without the need to locate exactly the orientation of the eyes of the user, it is possible to determine if the user of the vehicle has been looking at the screen, deleting the message from the screen once the attention time has been sufficient to capture the information contained. Thus, the user does not have to take any specific action for the message to disappear. By contrast, if the user has not been looking at the screen, the message is not discarded automatically. Moreover, there is no need to put in place more stringent safety systems to make up for any distraction of the user of the vehicle.

Note that the step of counting a time period between the start of coincidence and the end of coincidence is the time period for which the user focuses his eyes on the screen.

Advantageously, the predefined value is based on a priority level of the at least one message, so that if the priority level is high, the predefined value is higher, and if the priority level is low, the predefined value is lower. Thus, for a high priority level, i.e. a message with an important content, which has to be read by the user, the time that has to elapse before it is deactivated is longer. By contrast, for a low priority level, i.e. a message with a content that is not important, and it is essential that it is read by the user, the time that has to elapse before it is deactivated is shorter.

Moreover, the predefined value is based on the content of the at least one message, such that if it contains a large amount of information, the predefined value, and therefore the minimum user attention time, must be greater. By contrast, if the message contains a small amount of information, the predefined value, and therefore the minimum user attention time, must be smaller.

More specifically, the content of the at least one message is a number of words of the at least one message, such that if it contains a high number of words, the predefined value, and therefore the minimum user attention time, must be greater. By contrast, if the message contains a small number of words, the predefined value, and therefore the minimum user attention time, must be smaller.

According to another aspect of the invention, the content of the at least one message is a size of the at least one message, such that if the size is great, the predefined value, and therefore the minimum user attention time, must be greater since the size may be proportional to the amount of information contained. By contrast, if the size of the message is small, the predefined value, and therefore the minimum user attention time, must be smaller. "Size" means the extent of the message, the amount of memory taken up by the message, etc.

Other factors may be taken into account when calculating the predefined value, such as a letter size with which the content of the message is displayed, or a number of graphics and/or logos that make up the content of the message, etc. Alternatively, the predefined value is based on at least one parameter of the vehicle, such that if the parameter of the vehicle, for example the speed, requires that the user of the vehicle pay more attention to driving, the predefined value, and therefore the minimum user attention time, must be smaller. Thus, the method of the invention adapts to the circumstances of the vehicle at any time.

Furthermore, the predefined value is based on at least one parameter external to the vehicle, such that if the parameter external to the vehicle, for example the light, requires that the user of the vehicle pay more attention to driving, the predefined value, and therefore the minimum user attention time, must be smaller. Thus, the method of the invention adapts to the circumstances of the vehicle surroundings at any time.

In any case, what is important is that the time period for which the user pays attention to the message varies as a function of various factors, such as the priority of the message, the content of the message, parameters of the vehicle and/or parameters external to the vehicle, adapting to the immediate conditions and the particular needs of each case. This improves precision in making the decision whether to hide or keep the message on the graphic display device.

In a preferred embodiment of the invention, the step of counting the time period comprises, if the time period counted is less than a predefined value, adding together at least two discontinuous time periods. In this way, the fact that the attention paid by the user to the message on screen is interrupted more or less briefly has no effect on the provision of the functionalities of the present invention.

Note that each of the time periods measures the time from the moment the start of coincidence between the orientation of the at least one eyeball of the user of the vehicle and the graphic display device of the vehicle is determined, to the end of said coincidence. Discontinuous user attention time periods is understood to mean the situation in which the user looks at the screen of the vehicle for a length of time, stops looking, and then looks again and, in the intermediate time interval, he looks at some other visual point, other than the vehicle screen. Thus, the accumulation of said discontinuous periods of reading is taken into account when making the decision whether to hide the message or keep it on the graphic display device.

Advantageously, the step of counting the time period comprises adding together at least two discontinuous time periods, if each time period is separated by a time interval of less than a predefined intermediate time. Thus, if the user takes his attention away from the screen for a time period less than the predefined intermediate time, the discontinuous time periods are accumulated. On the other hand, if the user takes his attention away from the screen for a time period greater than the predefined intermediate time, the discontinuous time periods are not accumulated when making the decision whether to hide the message or keep it on the graphic display device.

According to another aspect of the invention, the method comprises hiding the at least one message if the coincidence between the orientation of the at least one eyeball of the user of the vehicle and the graphic display device of the vehicle is determined for a predefined safety period. It is thus ensured that the message does not appear for longer than a time period which is considered safe for driving the vehicle, thereby ensuring that the user does not take his eyes off the road for an excessively long time period. In one particular embodiment, said time period is predefined and constant, if it is not desired that the user take his eyes off the road for more than a predetermined number of seconds. According to another aspect of the invention, the predefined safety period is based on the at least one parameter of the vehicle, so that it may vary depending on the circumstances affecting driving of said vehicle, such as the speed of the vehicle or, in addition, the priority assigned to said message in particular. Furthermore, account is taken of the activation and deactivation of driving assistance systems, so that the message is displayed on screen for a longer time period when the driving assistance systems are activated.

According to another aspect of the invention, the predefined safety period is based on the at least one parameter external to the vehicle, which affect driving of said vehicle, such as the type of road on which the vehicle is travelling, the weather, or the level of light.

More specifically, the step of detecting the orientation of the at least one eyeball of the user of the vehicle starts when the at least one message is displayed on at least one graphic display device of the vehicle, such that the time for processing of the orientation of the eyeball is limited to the time period for which the message appears on the screen.

Moreover, the step of detecting the orientation of the at least one eyeball of the user of the vehicle ends when the at least one message is hidden on the at least one graphic display device of the vehicle, such that the time for processing of the orientation of the eyeball is limited to the time period for which the message appears on the screen.

In a preferred embodiment of the invention, the step of displaying the at least one message comprises displaying the at least one message in a zone of the graphic display device of the vehicle in such a way that coincidence is determined between the orientation of the at least one eyeball of the user of the vehicle and the zone of the graphic display device of the vehicle where the at least one message is displayed. Thus, if more than one message is displayed on the screen, the time period between the start of coincidence and the end of coincidence of the orientation of the at least one eyeball is counted individually.

The method according to the present invention also counts as time looking at the message the time for which the user looks at the graphic display device, even if he has been looking discontinuously over time, and at different points on said graphic display device.

According to another aspect of the invention, the step of detecting the orientation of the at least one eyeball of the user of the vehicle starts when the at least one message is displayed on at least one graphic display device of the vehicle, and the step of displaying the at least one message comprises displaying the at least one message in a zone of the graphic display device of the vehicle.

According to another aspect of the invention, the step of detecting the orientation of the at least one eyeball of the user of the vehicle ends when the at least one message is hidden on the at least one graphic display device of the vehicle, and the step of displaying the at least one message comprises displaying the at least one message in a zone of the graphic display device of the vehicle.

The attached drawings show, by way of non-limiting example, a method for managing a graphic display of at least one message in a vehicle, and the physical means required to implement said method, according to the invention. Other features and advantages of said method for managing a graphic display of at least one message in a vehicle, covered by the present invention, will become clear from the description of a preferred, but not exclusive, embodiment, which is illustrated by way of non-limiting example in the attached drawings, in which:

### BRIEF DESCRIPTION OF THE DRAWINGS

Figure 1 is a perspective view of the driver's position in a vehicle with at least one graphic display device, according to the present invention.
Figure 2 is a perspective view of a driver and a passenger who are managing at least one graphic display device, according to the present invention.
Figure 3 is a perspective view of the driver's position in a vehicle with at least one graphic display device, according to the present invention.
Figure 4 is a view of a graphic display device of a vehicle, with at least one message, according to the present invention.
Figure 5A is a graph, according to the present invention, showing the attention paid by the user to a given message displayed on at least one graphic display device, according to the present invention.
Figure 5B is a graph, according to the present invention, showing the magnitude of the pre-set times in the execution of the method of the present invention.

### DESCRIPTION OF A PREFERRED EMBODIMENT

With reference to the abovementioned figures, and in accordance with the reference numbers used, these figures show a preferred embodiment of the invention which comprises the parts and elements mentioned and described in detail below.

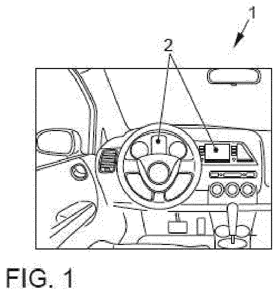

Figure 1 shows, by way of illustration, a perspective view of the driver's position in a vehicle 1 with at least one graphic display device 2, specifically with two graphic display devices 2. The first is located in the central area of the dashboard, and the driver has to turn his eyes to the right in the direction thereof, while the second is positioned just behind the steering wheel, and the driver simply has to lower his eyes slightly to focus his attention on said second graphic display device 2.

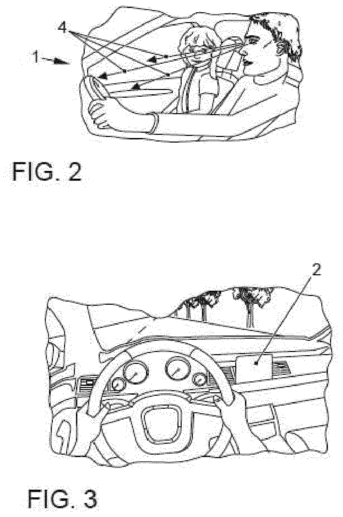

Figure 2 shows, by way of illustration, a perspective view of the driver's and co-driver's positions in a vehicle 1, according to the present invention. This figure shows several of the orientations 4 of the eyes of the user who is driving the vehicle 1, towards the graphic display device 2. In the description of the preferred embodiment, reference is made to the driver of the vehicle 1 as the person who is controlling the method for managing a graphic display 2 of at least one message 3 in a vehicle 1 according to the present invention, the present method being tailored to the needs of driving. That being said, the method may be implemented and controlled in the same way by any passenger in the vehicle 1.

Figure 3 shows, by way of illustration, a perspective view of the driver's position in a vehicle 1 with at least one graphic display device 2. This figure shows a situation of driving on a two-way road, where there is a potential risk of collision with the trees on the right-hand side, and with cars coming from the opposite direction, in the left-hand lane. Said potential risk is increased if the driver pays attention to the graphic display device 2 for longer than is recommended.

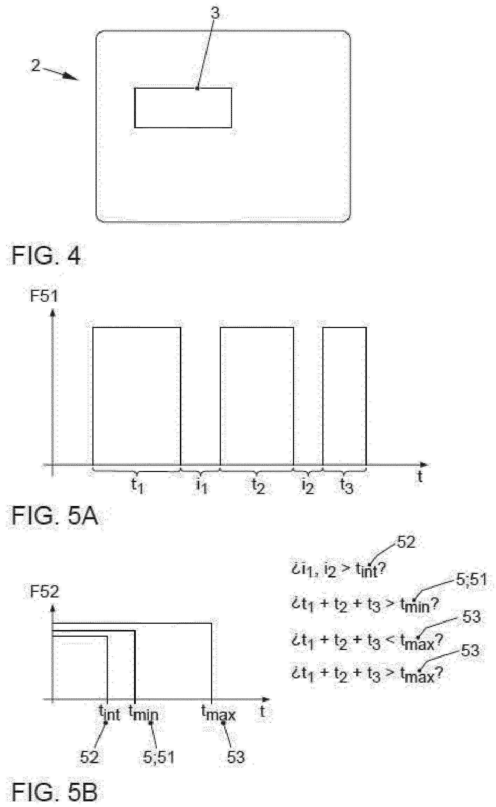

Figure 4 shows, by way of illustration, a detailed view of a graphic display device 2 of a vehicle 1 with at least one message 3 displayed. The orientation 4 of the eyes of the driver must be towards the interior of the outline of said graphic display device 2 for it to be considered that he is paying attention to the message 3.

To explain the invention in detail, reference is made to the graph 5A, which shows, on the vertical axis, the attention F51 of the user of the vehicle 1 and, on the horizontal axis, the time. Thus, the vertical axis represents binary values of the attention F51 as a function of whether it is determined that there is coincidence between the orientation 4 of the at least one eyeball of the driver of the vehicle 1 and the graphic display device 2 where the at least one message 3 is displayed.

Moreover, as regards the graph 5B, this shows the magnitudes of predefined values F52 of the times applicable to the present invention, namely the minimum time 51, the intermediate time 52 and the safety period 53, as defined above. Preferably, the intermediate time 52 will have the smallest magnitude, followed by the minimum time 51, and the safety period 53 will be the greatest of the three.

According to a preferred embodiment of the invention, as can be seen in Figures 5A and 5B, the step of counting the time period comprises, if the time period counted is less than a predefined value 5 (tₘᵢₙ), adding together at least two discontinuous time periods (t1 + t2). Thus, for example, to calculate the cumulative time "t" for a cycle of attention, said time "t" may be the sum of the times the user looks at the screen with a time difference equal to a predefined value 5 (tₘᵢₙ). If, for example, tₘᵢₙ is 2 seconds and the user first glances for 1 second, and then shortly afterwards glances again for 1.5 seconds, "t" will be equal to 2.5 seconds.

Thus, according to a first embodiment, a message 3 is displayed on a graphic display device 2, as shown in Figure 4. The calculation or counting of the time period for which the user focuses his attention on the message 3 comprises determining a start of coincidence between the orientation 4 of the at least one eyeball of the driver of the vehicle 1 and the graphic display device 2 where the message 3 is displayed, determining an end of the coincidence between the orientation 4 of the at least one eyeball of the driver of the vehicle 1 and the graphic display device 2 where the message 3 is displayed, thus counting the time period between the start and end of coincidence. Note that the attention of the driver of the vehicle 1 is focused on any area of the graphic display device 2.

According to a second embodiment, which is compatible with the first embodiment, the graphic display device 2 displays the message 3 in a predetermined, known zone. Thus, the calculation or counting of the time period for which the user focuses his attention on the message 3 comprises determining a start of coincidence between the orientation 4 of the at least one eyeball of the driver of the vehicle 1 and the zone of the graphic display device 2 where the message 3 is displayed, determining an end of the coincidence between the orientation 4 of the at least one eyeball of the driver of the vehicle 1 and the zone of the graphic display device 2 where the message 3 is displayed, thus counting the time period between the start and end of coincidence. Therefore, a more precise device for detecting the orientation 4 of the at least one eyeball of the driver of the vehicle 1 is required, ensuring greater efficiency in hiding the message 3 when it has been seen by the user.

Figure 5A depicts, by way of illustration, the attention of the user of the vehicle 1 in discontinuous blocks. The blocks of attention last for times t1, t2 and t3, successively, separated from one another by time intervals i1 and i2. The blocks are considered as such when the driver's eyes are oriented towards the interior of the outline of said graphic display device 2, otherwise this time is considered to form part of the intermediate intervals i1, i2.

Thus, the blocks of attention t1, t2 and/or t3 represent the time period counted between the start of coincidence and the end of coincidence between the orientation 4 of the at least one eyeball of the user of the vehicle 1 and the graphic display device 2 of the vehicle. By contrast, the intervals i1 and/or i2 represent time intervals between the end of the coincidence and the start of a new coincidence between the orientation 4 of the at least one eyeball of the driver of the vehicle and the graphic display device 2 of the vehicle 1.

Figure 5B depicts, by way of illustration, the magnitude of the pre-set times which may be used for comparison in the execution of the method of the present invention. Thus, as comparison example, it shows the comparison in which if either the interval i1 or the interval i2 is less than the intermediate time 52 (tᵢₙₜ), the counting of the time period comprises adding together the discontinuous time periods (t1, t2, t3). However, if the interval i1 or the interval i2 is greater than the intermediate time 52 (tᵢₙₜ), the counting of the time period does not comprise adding together the discontinuous time periods (t1, t2, t3) and a new cycle of attention begins, and counting of the time period starts again.

A second comparison compares whether the sum of the blocks of attention corresponding to the same cycle of attention or time period counted, i.e. the discontinuous time periods (t1 + t2 + t3), exceed a predefined value 5 tₘᵢₙ. Likewise, it is evaluated whether any of the time periods (t1, t2 or t3) exceed a tₘᵢₙ. If the time period counted is greater than the predefined value 5 (tₘᵢₙ), the message 3 is hidden. If, on the other hand, the time period counted is less than the predefined value 5 (tₘᵢₙ), the message 3 stays displayed on the graphic display device 2.

Likewise, if the time period counted, i.e. the discontinuous time periods (t1 + t2 + t3), or if any of the time periods (t1, t2 or t3), exceed a predefined safety period 53 (tₘₐₓ), the message 3 is hidden on the graphic display device 2. By contrast, if the time period counted does not exceed a predefined safety period 53 (tₘₐₓ), the message 3 stays displayed on the graphic display device 2. The predefined safety period 53 (tₘₐₓ) symbolizes a maximum time after which it is not considered safe for the user to keep his eyeball orientation 4 directed at the graphic display device 2, and therefore away from driving the vehicle 1.

It must also be mentioned that the predefined safety period 53 is based on the at least one parameter of the vehicle 1, such as the speed, or any signal from the vehicle safety systems. Alternatively, the predefined safety period 53 is based on the at least one parameter external to the vehicle 1, such as the weather, or the road on which the vehicle is travelling.

More particularly, it is pointed out that, as can be seen in Figures 1, 2, 3, 4, 5A and 5B, the method for managing a graphic display of at least one message 3 in a vehicle 1 comprises the steps of displaying at least one message 3 on at least one graphic display device 2 of the vehicle 1, detecting an orientation 4 of at least one eyeball of the driver of the vehicle 1, determining a start of coincidence between the orientation 4 of the at least one eyeball of the driver of the vehicle 1 and the graphic display device 2 of the vehicle 1 where the at least one message 3 is displayed, determining an end of the coincidence between the orientation 4 of the at least one eyeball of the driver of the vehicle 1 and the graphic display device 2 of the vehicle 1 where the at least one message 3 is displayed, counting a time period between the start of coincidence and the end of coincidence between the orientation 4 of the at least one eyeball of the driver of the vehicle 1 and the graphic display device 2 of the vehicle 1, and hiding the at least one message 3 if the time period counted is greater than a predefined value 5.

Note that detection of the orientation 4 of at least one eyeball is, preferably, performed using an eye tracker. Said tracker or detector is placed on the dashboard, on the rear view mirror and/or in the sun visor area. Preferably, the eye tracker is centred with respect to the driver's driving position, or the position of an occupant of the vehicle 1. Alternatively, the eye tracker is arranged on the central rear view mirror, a position in which it is less likely to be covered or interfered with by the hands or arms of occupants inside the vehicle.

In various implementations, the graphic display device 2 of a vehicle 1 may be the screen on the console or dashboard, also known in the motor vehicle industry as infotainment screen. It may also be the screen of the frontal display device, or head up display, and/or may also be a windscreen with the ability to show information.

According to another aspect of the invention, as can be seen in Figures 2, 3 and 4, the predefined value 5 is based on a level of priority of the at least one message 3. In one particular embodiment, tₘᵢₙ is a function of the priority of the message 3. Thus, if the message is high priority, for example if it is warning of a fault in the engine, the minimum time may be greater than for an incoming SMS alert, for example. Alternatively or in addition, the predefined value 5 is based on the content of the at least one message 3, i.e. the number of words that make up the message 3, the number of logos or graphics that make up the message 3, the amount of memory taken up by the message 3, etc.

According to another aspect of the invention, as can be seen in Figures 2, 3 and 4, the predefined value 5 is based on at least one parameter of the vehicle 1, such as the speed, or any signal from the vehicle safety systems.

More specifically, as can be seen in Figures 2, 3 and 4, the predefined value 5 is based on at least one parameter external to the vehicle 1, such as the weather, or the road on which the vehicle is travelling.

The details, shapes, dimensions and other accessory aspects, and the components used in the implementation of the method for managing a graphic display of at least one message in a vehicle, may be substituted as appropriate by others which are technically equivalent, without departing from the essence of the invention or the scope defined by the claims included after the following list.

### List of reference numbers:

- 1: vehicle
- 2: graphic display device
- 3: message
- 4: orientation
- 5: predefined value
- 51: minimum time
- 52: intermediate time
- 53: safety period

### List of text references:

- F51: attention
- F52: predefined values

## Claims

1. Method for managing a graphic display of at least one message (3) in a vehicle (1), in which the method comprises the steps of:
- displaying at least one message (3) on at least one graphic display device (2) of the vehicle (1),
- detecting an orientation (4) of at least one eyeball of a user of the vehicle (1),
- determining a start of coincidence between the orientation (4) of the at least one eyeball of the user of the vehicle (1) and the graphic display device (2) of the vehicle (1) on which the at least one message (3) is displayed;
- determining an end of the coincidence between the orientation (4) of the at least one eyeball of the user of the vehicle (1) and the graphic display device (2) of the vehicle on which the at least one message (3) is displayed;
- counting a time period between the start of coincidence and the end of coincidence between the orientation (4) of the at least one eyeball of the user of the vehicle (1) and the graphic display device (2) of the vehicle (1), and
- hiding the at least one message (3) if the time period counted is greater than a predefined value (5).

2. Method according to Claim 1, **characterized in that** the predefined value (5) is based on a priority level of the at least one message (3).

3. Method according to either of the preceding claims, **characterized in that** the predefined value (5) is based on the content of the at least one message (3).

4. Method according to Claim 3, **characterized in that** the content of the at least one message (3) is a number of words of the at least one message (3).

5. Method according to either of Claims 3 or 4, **characterized in that** the content of the at least one message (3) is a size of the at least one message (3).

6. Method according to any of the preceding claims, **characterized in that** the predefined value (5) is based on at least one parameter of the vehicle (1).

7. Method according to any of the preceding claims, **characterized in that** the predefined value (5) is based on at least one parameter external to the vehicle (1).

8. Method according to any of the preceding claims, **characterized in that** the step of counting the time period comprises, if the time period counted is less than a predefined value (5), adding together at least two discontinuous time periods.

9. Method according to Claim 8, **characterized in that** the step of counting the time period comprises adding together at least two discontinuous time periods, if each time period is separated by a time interval of less than a predefined intermediate time (52).

10. Method according to any of the preceding claims, **characterized in that** it comprises hiding the at least one message (3) if the coincidence between the orientation (4) of the at least one eyeball of the user of the vehicle (1) and the graphic display device (2) of the vehicle (1) is determined for a predefined safety period (53).

11. Method according to Claim 10, **characterized in that** the predefined safety period (53) is based on the at least one parameter of the vehicle (1).

12. Method according to either of Claims 10 or 11, **characterized in that** the predefined safety period (53) is based on the at least one parameter external to the vehicle (1) .

13. Method according to any of the preceding claims, **characterized in that** the step of detecting the orientation (4) of the at least one eyeball of the user of the vehicle (1) starts when the at least one message (3) is displayed on at least one graphic display device (2) of the vehicle (1).

14. Method according to any of the preceding claims, **characterized in that** the step of detecting the orientation (4) of the at least one eyeball of the user of the vehicle (1) ends when the at least one message (3) is hidden on the at least one graphic display device (2) of the vehicle (1).

15. Method according to any of the preceding claims, **characterized in that** the step of displaying the at least one message (3) comprises displaying the at least one message (3) in a zone of the graphic display device (2) of the vehicle (1) in such a way that coincidence is determined between the orientation (4) of the at least one eyeball of the user of the vehicle (1) and the zone of the graphic display device (2) of the vehicle (1) where the at least one message (3) is displayed.
